# EUROPÄISCHE PATENTSCHRIFT

(11) **EP 2 408 289 B1**
(45) Veröffentlichungstag und Bekanntmachung des Hinweises auf die Patenterteilung: **15.05.2013**
(21) Anmeldenummer: 10715663.0
(22) Anmeldetag: 05.03.2010
(51) Int. Cl.: A01B 3/46

(54) **DREHPFLUG MIT VERBESSERTEM UMSCHWENKMECHANISMUS**
TURN-ABOUT PLOUGH WITH AN IMPROVED SWITCHING-AROUND MECHANISM
CHARRUE TOURNE-OREILLE À MÉCANISME DE PIVOTEMENT AMÉLIORÉ

(30) Priorität: 21.03.2009 DE 102009014341
(43) Veröffentlichungstag der Anmeldung: 25.01.2012
(73) Patentinhaber: Lemken GmbH & Co. KG, 46519 Alpen (DE)
(72) Erfinder: MEURS, Wilhelm, 46519 Alpen (DE); VERHÜLSDONK, Mark, 47627 Kevelaer (DE)
(74) Vertreter: Schulte & Schulte
(86) Internationale Anmeldenummer: PCT/DE2010/000240
(87) Internationale Veröffentlichungsnummer: WO 2010/108468

(56) Entgegenhaltungen:
- EP-A1- 0 477 041
- DE-A1-102006 039 513
- DE-U1-202008 009 319
- US-A- 2 760 420

## Beschreibung

Die Erfindung betrifft einen Drehpflug mit einem Anbauturm mit Anbaupunkten zum Anbau des Drehpfluges an einen Traktor mit einem Pflugrahmen, der auf der einen Seite rechts wendende Pflugkörper und auf der gegenüberliegenden Seite links wendende Pflugkörper trägt und um eine Drehachse durch mindestens einen Drehzylinder gegenüber dem Anbauturm drehbar ist, so dass wahlweise mit der Seite mit rechts wendenden Pflugkörpern oder mit der Seite mit links wendenden Pflugkörpern gepflügt werden kann, sowie mit einem am Pflugrahmen angeordneten Stützrad zur Arbeitstiefenführung des Drehpfluges, das zur Tiefenführung des Drehpfluges in beiden Drehstellungen auf gegenüberliegende Seiten des Pflugrahmens umschwenkbar und über einen Hydraulikzylinder in der Arbeitstiefenführung einstellbar ist.

Derartige Drehpflüge werden mit Stützrädern oder Pendelstützrädern ausgerüstet, um den Drehpflug in der Arbeitstiefe zu führen. Die Tiefeneinstellung des Stützrades erfolgt dabei üblicherweise über Spindeln, Steckstifte oder fernbedienbar über einen Hydraulikzylinder. Ein Stützrad für Drehpflüge, das über einen Hydraulikzylinder in der Arbeitstiefenführung einstellbar ist, ist der deutschen Offenlegungsschrift DE 10 2006 039 513 A1 zu entnehmen. Das Stützrad dieses Drehpfluges wird nach dem Ausheben des Drehpfluges während des Drehvorganges des Pflugrahmens durch eine hydraulische Folgesteuerung umgeschwenkt, und zwar in Abhängigkeit von der Betätigung der Drehvorrichtung des Pfluges und der Schaltfolge der Folgesteuerung. Der Hydraulikzylinder wird dann entsprechend mit Öl versorgt. Der Ölfluss von der Drehvorrichtung zum Hydraulikzylinder und zurück wird während des Drehvorganges des Pflugrahmens und des Umschwenkvorganges des Stützrades funktionstechnisch und auch zeitabhängig gesteuert. Derartige Abhängigkeiten steigern die Störanfälligkeit des Systems und sind auch relativ aufwendig. Auch die Anzahl von vier Hochdruckleitungen, die vom Anbauturm bis zum Stützrad verlegt werden müssen, dient nicht der Funktionssicherheit des Stützrades. Die Hochdruckleitungen sind im Stützradbereich als Hochdruckschläuche ausgebildet, die zum Teil während des Drehvorganges und des Umschwenkvorganges zeitweise unter hohem Druck stehen. Gerade während des Drehvorganges und des Umschwenkvorganges des Stützrades werden die Hochdruckschläuche extrem gebogen und auch verdreht. Die Lebensdauer von unter hohem Druck stehenden Hochdruckschläuchen wird dadurch deutlich reduziert.

Der Erfindung liegt daher die Aufgabe zugrunde, ein Stützrad für Drehpflüge zu schaffen, das in einfacher Art und Weise über einen Hydraulikzylinder in der Arbeitstiefenführung eingestellt werden kann, das während des Drehvorganges des Pfluges zuverlässig umschwenkt, das einfach aufgebaut ist und das funktionssicher ist.

Die Aufgabe wird erfindungsgemäß nach einer ersten Variante der Erfindung dadurch gelöst, dass der Hydraulikzylinder zwei Druckräume aufweist, einen Ringraum und einen Kolbenraum, dass der Hydraulikzylinder mit einer Ventileinheit in Verbindung steht, die den Ringraum und den Kolbenraum hydraulisch miteinander verbindet und so einen Ölaustausch zwischen den beiden Druckräumen während des Umschwenkvorganges des Stützrades ermöglicht, wobei ein Druckspeicher vorgesehen ist, der mit dem Ringraum und über die Ventileinheit mit dem Kolbenraum hydraulisch verbunden ist und während des Umschwenkvorganges des Stützrades sowohl Öl aus den Druckräumen aufnehmend als auch wieder abgebend ausgebildet ist und dass die Ventileinheit einen Ölaustausch der Druckräume während der Pflugarbeit unterbindet.

Das Stützrad ist in der Arbeitstiefenführung über einen Hydraulikzylinder einstellbar, wofür nur eine Hydraulikleitung bzw. Hochdruckleitung benötigt wird. Die Einstellung dafür erfolgt durch Betätigung eines Steuergerätes des Traktors. Nach der Betätigung fließt kein Öl mehr zum Hydrauliksystem des Stützrades und auch nicht vom Hydrauliksystem des Stützrades zur Traktorhydraulik. Über ein entsperrbares Rückschlagventil wird sichergestellt, dass auch bei Undichtigkeiten der Traktorhydraulik kein Öl fließen kann. Das Hydrauliksystem des Stützrades ist nur bei Veränderung der Arbeitstiefe mit der Hydraulikanlage des Traktors verbunden. Während der Pflugarbeit und während des Drehvorganges ist es von der Hydraulikanlage des Traktors hydraulisch abgesperrt. Zu einem Zeitpunkt, wo das Stützrad keine Tiefenführungsfunktion mehr übernehmen muss, z.B. bei Beginn des Drehvorganges des Drehpfluges, wird ein Ventil der Ventileinheit der autarken Hydraulikanlage des Stützrades geöffnet, wodurch die beiden Druckräume des Hydraulikzylinders und der Druckspeicher miteinander verbunden werden und ein Ölaustausch ermöglicht wird.

Während des Drehvorganges des Pflugrahmens und der Umschwenkphase des Stützrades fließt das Öl aufgrund der Schwerkraft des Stützrades während der ersten Hälfte der Umschwenkphase aus dem Kolbenraum in den Ringraum. Der Druckspeicher nimmt dabei den Ölanteil aus dem Kolbenraum auf, der nicht mehr in den Ringraum aufgenommen werden kann. Während der zweiten Hälfte der Umschwenkphase des Stützrades fließt das Öl aus dem Ringraum und aus dem Druckspeicher wieder zurück in den Kolbenraum. Die gesamte Ölmenge befindet sich dann wieder im Kolbenraum. Es handelt sich dabei um die Menge, die vor dem Drehvorgang und vor dem Umschwenkvorgang des Stützrades im Kolbenraum war. Dies entspricht dann der gleichen Arbeitstiefeneinstellung wie vor dem Drehvorgang. Nach Beendigung des Drehvorganges wird das Ventil der Ventileinheit wieder geschlossen, so dass kein Ölaustausch zwischen Kolbenraum, Ringraum und Druckspeicher mehr möglich ist. Das Stützrad befindet sich dann wieder in der zuvor eingestellten Stellung für die Arbeitstiefenführung des Drehpfluges.

Die Aufgabe wird nach einer zweiten Variante der Erfindung dadurch gelöst, dass der Hydraulikzylinder nur einen Druckraum aufweist, der mit einem Druckspeicher hydraulisch verbunden ist, dass der Hydraulikzylinder mit einer Ventileinheit in Verbindung steht, die den Druckraum und den Druckspeicher hydraulisch miteinander verbindet und so einen Ölaustausch zwischen Druckraum und Druckspeicher ermöglicht, so dass der Druckspeicher während des Umschwenkvorganges des Stützrades zuerst Öl aus dem Hydraulikzylinder aufnehmend und danach das Öl wieder abgebend ausgebildet ist und dass die Ventileinheit einen Ölaustausch zwischen Druckraum und Druckspeicher während der Pflugarbeit unterbindet.

Bei dieser zweiten Ausführungsform der Erfindung kommt ein Hydraulikzylinder nur einem anstatt mit zwei Druckräumen zum Einsatz. Eine Ausführung mit nur einem Druckraum vereinfacht das gesamte System der autarken Hydraulikanlage des Stützrades, allerdings muss dann ein deutlich größerer Druckspeicher eingesetzt werden, da der Druckspeicher das komplette Öl aus dem Kolbenraum aufnehmen muss, weil kein Ringraum zur Verfügung steht.

Die Aufgabe wird nach einer dritten Variante der Erfindung dadurch gelöst, dass der Hydraulikzylinder als Gleichlaufzylinder ausgebildet ist und zwei gleich große Ringräume als Druckräume aufweist, einen ersten Ringraum und einen zweiten Ringraum, dass der Gleichlaufzylinder mit einer Ventileinheit in Verbindung steht, die die Druckräume hydraulisch miteinander verbindet und einen Ölaustausch zwischen den beiden Druckräumen während des Umschwenkvorganges des Stützrades ermöglicht, wobei der erste Ringraum während des Umschwenkvorganges des Stützrades sowohl Öl aus dem zweiten Ringraum aufnehmend als auch wieder an den zweiten Ringraum abgebend ausgebildet ist und dass die Ventileinheit einen Ölaustausch der Druckräume während der Pflugarbeit unterbindet.

Im Gegensatz zu den zuvor genannten beiden Ausführungen wird für diese kein Druckspeicher benötigt. Das Öl, das sich im ersten Ringraum befindet, kann während des Umschwenkvorganges des Stützrades in den zweiten Ringraum gefördert werden und wieder zurück. Diese Ausführungsform ist insbesondere dann zu empfehlen, wenn ausreichend Bauraum und Freiraum zur Verfügung steht, da Gleichlaufzylinder in ihrer Gesamtlänge länger sind als übliche Hydraulikzylinder.

Die Erfindung sieht weiter vor, dass die Ventileinheit über einen Schalter den Ölaustausch für den Umschwenkvorgang des Stützrades freigebend und nach Beendigung des Umschwenkvorganges des Stützrades den Ölfluss wieder trennend ausgebildet ist. Bei dieser Ausführungsform wird die Ventileinheit über einen Schalter betätigt, der nach oder während des Aushebens des Pflugrahmens auf dem Vorgewende die Ventileinheit so schaltet, dass ein Ölaustausch während des Umschwenkvorganges des Stützrades ermöglicht wird und dass ein Ölaustausch verhindert wird, wenn der Umschwenkvorgang des Stützrades beendet ist.

Zur Ausbildung des Schalters ist vorgesehen, dass dieser die Ventileinheit mechanisch, hydraulisch, pneumatisch, elektrisch, elektronisch oder über Schwerkraft schaltet und vorzugsweise als Magnetschalter ausgebildet ist, der bei Drehbeginn über eine Steuereinheit mit Strom versorgt wird, wobei die Steuereinheit über einen Strömungswächter das Schaltsignal erhaltend ausgebildet ist. Abhängig von der steuerungstechnischen Ausrüstung des Traktors oder des Drehpfluges kann so die Ventileinheit geschaltet werden, wobei ein Magnetschalter als Schalter bevorzugt wird, da ein Magnetschalter in einem Magnetventil einfach und kostengünstig einzusetzen ist. Über einen Strömungswächter, der bei Drehbeginn ein Schaltsignal erzeugt, kann auf einfache Weise die Ventileinheit mit Magnetventil geschaltet werden.

Weiter ist erfindungsgemäß vorgesehen, dass der Hydraulikzylinder zwei Anbaupunkte für den Anbau an das Stützrad aufweist, wobei der erste Anbaupunkt am Ende der Kolbenstange vorgesehen ist und der zweite Anbaupunkt im Bereich der Kolbenstangenführung der Kolbenstange bzw. im mittleren Bereich des Zylinderrohres des Hydraulikzylinders.
Diese Ausführungsform des Hydraulikzylinders ermöglicht eine sehr kompakte und kräftemäßig günstige Integration des Hydraulikzylinders im Stützradsystem.

Weitere Einzelheiten der Erfindung sind den Figuren und der Figurenbeschreibung zu entnehmen.

Es zeigen:
- Figur 1: eine Seitenansicht des Stützrades,
- Figur 2: eine perspektivische Seitenansicht des Stützrades und
- Figur 3: einen Schaltplan einer bevorzugten Ausführungsform mit einem Hydraulikzylinder mit Ringraum und Kolbenraum.

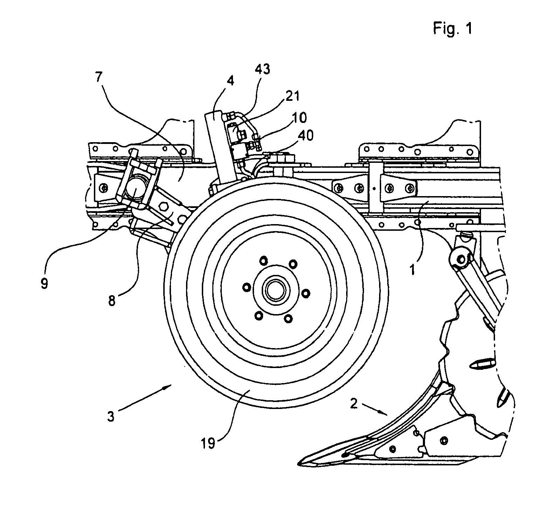

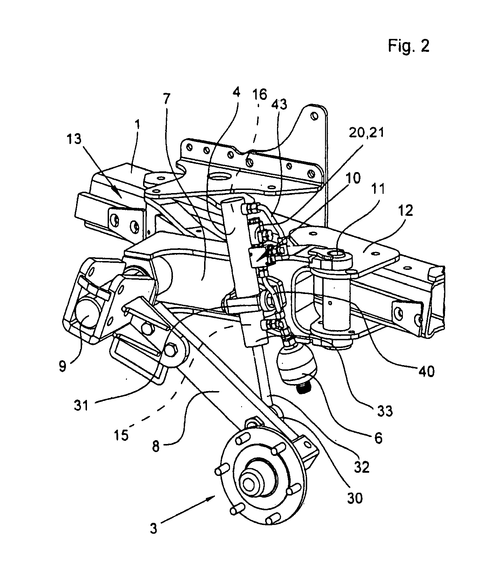

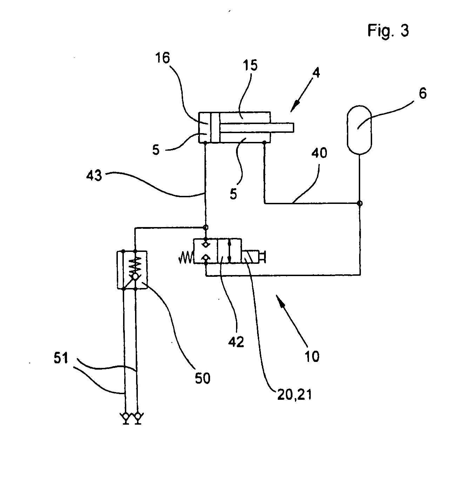

Figur 1 zeigt eine Seitenansicht des Stützrades 3 mit Rad 19, das über seine Konsole 7 am Pflugrahmen 1 angeordnet ist und mehrere rechts wendende Pflugkörper 2 und links wendende Pflugkörper trägt. Das Stützrad 3 ist drehbar am Radhalm 8 gelagert, der über die quer angeordnete Schwenkachse 9 mit der Konsole 7 verbunden ist. Am Radhalm 8 greift der Hydraulikzylinder 4 an, der sich wiederum an der Konsole 7 abstützt. Dies ist insbesondere Figur 2 zu entnehmen. Der Hydraulikzylinder 4 ist mit der Ventileinheit 10 ausgestattet, die einen Magnetschalter 21 als Schalter 20 aufweist. Über den Magnetschalter 21 wird die Ventileinheit so geschaltet, dass während des Umschwenkvorganges des Stützrades 3 ein Ölaustausch zwischen Kolbenraum 16 und Ringraum 15 ermöglicht ist. Die Ventileinheit 10 ist über die Hydraulikleitung 43 mit dem Kolbenraum 16 des Hydraulikzylinders 4 verbunden und über die Hydraulikleitung 40 mit dem Ringraum 15 und dem Druckspeicher 6. Näheres dazu ist Figur 3 zu entnehmen.

Figur 2 zeigt eine perspektivische Seitenansicht des Stützrades 3. Der Übersichtlichkeit wegen wurde hier auf die Darstellung des Rades 19 selbst verzichtet. Das Stützrad 3 ist mit seinem Radhalm 8 über die quer angeordnete Schwenkachse 9 mit der Konsole 7 verbunden. Die Konsole 7 ist über die horizontale Achse 11 schwenkbar mit dem Pflugrahmen 1 über die Rahmenplatten 12 verbunden. So kann über ein Lenkersystem 13 die Laufrichtung des Rades 19 der jeweils eingestellten Arbeitsbreite des Drehpfluges angepasst werden. Der Hydraulikzylinder 4 greift mit seiner Kolbenstange 32 mit seinem kolbenseitigen Anbaupunkt 30 im Abstand zur quer angeordneten Schwenkachse 9 am Radhalm 8 an. Mit dem Anbaupunkt 31 im Bereich der Kolbenstangenführung 33 ist der Hydraulikzylinder 4 um eine Schwenkachse mit der Konsole 7 verbunden. Die durch den Hydraulikzylinder 4 verdeckte Schwenkachse ist vorzugsweise achsparallel zur quer angeordneten Schwenkachse 9 angeordnet. Der Hydraulikzylinder 4 weist die Ventileinheit 10 auf, die über die Hydraulikleitung 43 mit dem Kolbenraum 16 des Hydraulikzylinders 4 verbunden ist und über die Hydraulikleitung 40 mit dem Ringraum 15 und dem Druckspeicher 6. Während des Drehvorganges schwenkt der Hydraulikzylinder 4 zwischen Radhalm 8 und Konsole 7 durch in die gegenüberliegende Position. Durch die besondere Anordnung der Anbaupunkte 31 im Bereich der Kolbenstangenführung 33 wird für das Umschwenken des Hydraulikzylinders 4 unter Beibehaltung günstiger Hebelarme wenig Freiraum zwischen Radhalm 8 und Konsole 7 benötigt. Das Stützrad 3 kann dadurch insgesamt sehr kompakt gebaut werden. Der Schalter 20 ist hier als Magnetschalter 21 ausgebildet und schaltet die Ventileinheit 10 nur dann, wenn das Stützrad in die gegenüberliegende Arbeitsstellung umschwenken soll und auch dann, wenn sich das Stützrad wieder in Arbeitsstellung befindet. Die Ventileinheit 10 ist hier als Magnetventil 42 ausgebildet. Wenn das Magnetventil 42 geöffnet ist, wird ein Ölaustausch über die Hydraulikleitungen 40 und 43 zwischen Ringraum 15 und Kolbenraum 16 und Druckspeicher 6 ermöglicht.

Figur 3 zeigt einen Schaltplan des Hydrauliksystems aus Hydraulikzylinder 4, Druckspeicher 6 und Ventileinheit 10. Das entsperrbare Rückschlagventil 50 ist für die Funktion des Umschwenkvorganges unwichtig. Es soll nur sicherstellen, dass bei einem undichten Steuergerät des Traktors in geschlossener Stellung kein Öl fließt. Je nach Schaltstellung des entsprechenden Steuergerätes des Traktors fließt Öl vom Traktor über die Hydraulikleitung 51 in den Kolbenraum 16 des

Hydraulikzylinders 4 hinein oder zurück zum Traktor. So wird die Arbeitstiefeneinstellung geändert. Bei geschlossenem Steuergerät des Traktors ist das Hydrauliksystem des Stützrades autark. Das Hydrauliksystem des Stützrades 3 ist dann vollkommen von der restlichen Traktorhydraulik getrennt. Die Ventileinheit ist in der Darstellung gemäß Figur 3 so geschaltet, wie es für die Pflugarbeit erforderlich ist. Ein Ölaustausch zwischen dem Kolbenraum 16 und dem Ringraum 15 des Hydraulikzylinders 4 ist so nicht möglich. Wenn die Ventileinheit 10, in diesem Fall ein Magnetventil 42 mit Magnetschalter 21 als Schalter 20 geöffnet wird, erfolgt ein Ölaustausch zwischen den einzelnen Druckräumen 5 und dem Druckspeicher 6. Dadurch wird ein Ölaustausch bewirkt, der einen gedämpften Umschenkvorgang des Stützrades 3 gewährleistet. Das gesamte Öl des Kolbenraums 16 kann so in den Ringraum 15 und den Druckspeicher 6 fließen. Der Druckspeicher 6 und die Schwerkraft des Stützrades 3 sorgen dafür, dass das gesamte Öl nach dem Umschwenkvorgang des Stützrades 3 wieder in den Kolbenraum 16 gelangt und so die voreingestellte Arbeitstiefeneinstellung wieder erreicht wird. Bevor das Rad 19 des Stützrades 3 Kontakt mit dem Boden bekommt, wird die Ventileinheit 10 wieder geschaltet, um einen Ölaustausch während der Pflugarbeit zu unterbinden.

## Patentansprüche

1. Drehpflug mit einem Anbauturm mit Anbaupunkten zum Anbau des Drehpfluges an einen Traktor, mit einem Pflugrahmen (1), der auf der einen Seite rechts wendende Pflugkörper (2) und auf der gegenüberliegenden Seite links wendende Pflugkörper trägt und um eine Drehachse durch mindestens einen Drehzylinder gegenüber dem Anbauturm drehbar ist, so dass wahlweise mit der Seite mit den rechts wendenden Pflugkörpern (2) oder mit der Seite mit den links wendenden Pflugkörpern gepflügt werden kann, sowie mit einem am Pflugrahmen (1) angeordneten Stützrad (3) zur Arbeitstiefenführung des Drehpfluges, das zur Tiefenführung des Drehpfluges in beiden Drehstellungen auf gegenüberliegende Seiten des Pflugrahmens umschwenkbar und über einen Hydraulikzylinder (4) in der Arbeitstiefenführung einstellbar ist,
**dadurch gekennzeichnet,**
**dass** der Hydraulikzylinder (4) zwei Druckräume (5) aufweist, einen Ringraum (15) und einen Kolbenraum (16), dass der Hydraulikzylinder (4) mit einer Ventileinheit (10) in Verbindung steht, die den Ringraum (15) und den Kolbenraum (16) hydraulisch miteinander verbindet und so einen Ölaustausch zwischen den beiden Druckräumen (5) während des Umschwenkvorganges des Stützrades ermöglicht, wobei ein Druckspeicher (6) vorgesehen ist, der mit dem Ringraum (15) und über die Ventileinheit (10) mit dem Kolbenraum (16) hydraulisch verbunden ist und während des Umschwenkvorganges des Stützrades sowohl Öl aus den Druckräumen (5) aufnehmend als auch wieder abgebend ausgebildet ist und dass die Ventileinheit (10) einen Ölaustausch zwischen den Druckräumen (5) während der Pflugarbeit unterbindet.

2. Drehpflug mit einem Anbauturm mit Anbaupunkten zum Anbau des Drehpfluges an einen Traktor, mit einem Pflugrahmen (1), der auf der einen Seite rechts wendende Pflugkörper (2) und auf der gegenüberliegenden Seite links wendende Pflugkörper trägt und um eine Drehachse durch mindestens einen Drehzylinder gegenüber dem Anbauturm drehbar ist, so dass wahlweise mit der Seite mit den rechts wendenden Pflugkörpern (2) oder mit der Seite mit den links wendenden Pflugkörpern gepflügt werden kann, sowie mit einem am Pflugrahmen (1) angeordneten Stützrad (3) zur Arbeitstiefenführung des Drehpfluges, das zur Tiefenführung des Drehpfluges in beiden Drehstellungen auf gegenüberliegende Seiten des Pflugrahmens umschwenkbar und über einen Hydraulikzylinder (4) in der Arbeitstiefenführung einstellbar ist,
**dadurch gekennzeichnet,**
**dass** der Hydraulikzylinder (4) einen Druckraum aufweist, der mit einem Druckspeicher (6) hydraulisch verbunden ist, dass der Hydraulikzylinder (4) mit einer Ventileinheit (10) in Verbindung steht, die den Druckraum und den Druckspeicher (6) hydraulisch miteinander verbindet und so einen Ölaustausch zwischen Druckraum und Druckspeicher (6) ermöglicht, so dass der Druckspeicher (6) während des Umschwenkvorganges des Stützrades (3) zuerst Öl aus dem Hydraulikzylinder (4) aufnehmend und danach das Öl wieder abgebend ausgebildet ist und dass die Ventileinheit (10) einen Ölaustausch zwischen Druckraum und Druckspeicher (6) während der Pflugarbeit unterbindet.

3. Drehpflug mit einem Anbauturm mit Anbaupunkten zum Anbau des Drehpfluges an einen Traktor, mit einem Pflugrahmen (1), der auf der einen Seite rechts wendende Pflugkörper (2) und auf der gegenüberliegenden Seite links wendende Pflugkörper trägt und um eine Drehachse durch mindestens einen Drehzylinder gegenüber dem Anbauturm drehbar ist, so dass wahlweise mit der Seite mit den rechts wendenden Pflugkörpern (2) oder mit der Seite mit den links wendenden Pflugkörpern gepflügt werden kann, sowie mit einem am Pflugrahmen (1) angeordneten Stützrad (3) zur Arbeitstiefenführung des Drehpfluges, das zur Tiefenführung des Drehpfluges in beiden Drehstellungen auf gegenüberliegende Seiten des Pflugrahmens umschwenkbar und über einen Hydraulikzylinder (4) in der Arbeitstiefenführung einstellbar ist,
**dadurch gekennzeichnet,**
**dass** der Hydraulikzylinder (4) als Gleichlaufzylinder ausgebildet ist und zwei gleich große Ringräume als Druckräume (5) aufweist, einen ersten Ringraum und einen zweiten Ringraum, dass der Gleichlaufzylinder mit einer Ventileinheit (10) in Verbindung steht, das die Druckräume (5) hydraulisch miteinander verbindet und einen Ölaustausch zwischen den beiden Druckräume (5) während des Umschwenkvorganges des Stützrades (3) ermöglicht, wobei der erste Ringraum während des Umschwenkvorganges des Stützrades sowohl Öl aus dem zweiten Ringraum aufnehmend als auch wieder an den zweiten Ringraum abgebend ausgebildet ist und dass die Ventileinheit (10) einen Ölaustausch zwischen den Druckräumen (5) während der Pflugarbeit unterbindet.

4. Drehpflug nach mindestens einem der Ansprüche 1 bis 3,
**dadurch gekennzeichnet,**
**dass** die Ventileinheit (10) über einen Schalter (20) den Ölaustausch für den Umschwenkvorgang des Stützrades (3) freigebend und nach Beendigung des Umschwenkvorganges des Stützrades (3) den Ölfluss wieder trennend ausgebildet ist.

5. Drehpflug nach Anspruch 4,
**dadurch gekennzeichnet,**
**dass** der Schalter (20) mechanisch, hydraulisch, pneumatisch, elektrisch, elektronisch oder über Schwerkraft die Ventileinheit (10) schaltet, vorzugsweise über einen Magnetschalter (21), der bei Drehbeginn über eine Steuereinheit mit Strom versorgt wird, wobei die Steuereinheit über einen Strömungswächter das Schaltsignal erhaltend ausgebildet ist.

6. Drehpflug nach mindestens einem der Ansprüche 1 bis 5,
**dadurch gekennzeichnet,**
**dass** der Hydraulikzylinder (4) zwei Anbaupunkte (30,31) für den Anbau an das Stützrad (3) aufweist, wobei der erste Anbaupunkt (30) am Ende der Kolbenstange (32) vorgesehen ist und der zweite Anbaupunkt im Bereich der Kolbenstangenführung (33) der Kolbenstange (32) bzw. im mittleren Bereich des Zylinderrohres (35) des Hydraulikzylinders (3).

## Claims

1. A reversible plow with a mounted tower with attachment points for attaching the reversible plow to a tractor, with a plow frame (1) which, on the one side, carries plow bodies (2) which turn to the right and, on the opposite side, carries plow bodies which turn to the left and is rotatable around a rotation axis by means of at least one rotary cylinder relative to the mounted tower so that it is optionally possible to plow with the side with the plow bodies (2) which turn to the right or with the side with the plow bodies which turn to the left, as well as with a supporting wheel (3) arranged on the plow frame (1) for operating depth guidance of the reversible plow, which wheel is pivotable for depth guidance of the reversible plow in both rotational positions on opposing sides of the plow frame and adjustable via an hydraulic cylinder (4),
**characterized**
**in that** the hydraulic cylinder (4) has two pressure chambers (5), an annulus (15) and a piston chamber (16), in that the hydraulic cylinder (4) is connected with a valve unit (10), which connects the annulus (15) and a piston chamber (16) together hydraulically and thus allows oil exchange between both pressure chambers (5) during the swiveling movement of the supporting wheel, wherein a pressure accumulator (6) is provided which is connected hydraulically with the annulus (15) and also with the piston chamber (16) via the valve unit (10) and is designed to capture oil out of the pressure chambers (5) during the swiveling movement of the supporting wheel and to deliver it back in again and in that the valve unit (10) prevents any oil exchange between the pressure chambers (5) during plowing.

2. A reversible plow with a mounted tower with attachment points for attaching the reversible plow to a tractor, with a plow frame (1) which, on the one side, carries plow bodies (2) which turn to the right and, on the opposite side, carries plow bodies which turn to the left and is rotatable around a rotation axis by means of at least one rotary cylinder relative to the mounted tower so that it is optionally possible to plow with the side with the plow bodies (2) which turn to the right or with the side with the plow bodies which turn to the left, as well as with a supporting wheel (3) arranged on the plow frame (1) for operating depth guidance of the reversible plow, which wheel is pivotable for depth guidance of the reversible plow in both rotational positions on opposing sides of the plow frame and adjustable via an hydraulic cylinder (4),
**characterized**
**in that** the hydraulic cylinder (4) has a pressure chambers with which a pressure accumulator (6) is connected hydraulically, in that the hydraulic cylinder (4) is connected with a valve unit (10), which connects the pressure chamber and the pressure accumulator (6) together hydraulically and thus allows oil exchange between the pressure chamber and the pressure accumulator (6) so that the pressure accumulator (6) is designed to capture oil out of the hydraulic cylinder (4) during the swiveling movement of the supporting wheel (3) and to deliver it back in again and in that the valve unit (10) prevents any oil exchange between the pressure chamber and the pressure accumulator (6) during plowing.

3. A reversible plow with a mounted tower with attachment points for attaching the reversible plow to a tractor, with a plow frame (1) which, on the one side, carries plow bodies (2) which turn to the right and, on the opposite side, carries plow bodies which turn to the left and is rotatable around a rotation axis by means of at least one rotary cylinder relative to the mounted tower so that it is optionally possible to plow with the side with the plow bodies (2) which turn to the right or with the side with the plow bodies which turn to the left, as well with a supporting wheel (3) arranged on the plow frame (1) for operating depth guidance of the reversible plow, which is rotatable for depth guidance of the reversible plow in both rotational positions on the opposing sides of the plow frame and via an hydraulic cylinder (4),
**characterized**
**in that** the hydraulic cylinder (4) is designed as a synchronized cylinder and has two equally sized annuluses as pressure chambers (5), a first annulus and a second annulus, in that the synchronized cylinder is in connection with a valve unit (10) that connects the pressure chambers (5) hydraulically with one another and allows oil exchange between both pressure chambers (5) during the swiveling movement of the supporting wheel (3), wherein the first annulus is designed to capture oil out of the second annulus and to deliver it back again during the swiveling movement of the supporting wheel and in that the valve unit (10) prevents any oil exchange between the pressure chamber and the pressure chambers (5) during plowing.

4. The reversible plow according to at least one of Claims 1 to 3,
**characterized**
**in that** the valve unit (10) enables oil exchange for the swiveling movement of the supporting wheel (3) via a switch (20) and is designed to disconnect the oil flow after ending the swiveling movement of the supporting wheel (3).

5. The reversible plow according to Claim 4,
**characterized**
**in that** the switch (20) switches the valve unit (10) mechanically, hydraulically, pneumatically, electrically, electronically or via gravitational force, preferably via a solenoid switch (21), which is supplied with current via a control unit when beginning to turn, wherein the control unit is designed to maintain the switching signal via a flow-rate controller.

6. The reversible plow according to at least one of Claims 1 to 5,
**characterized**
**in that** the hydraulic cylinder (4) has two attachment points (30, 31) for attachment to the supporting wheel (3), wherein the first attachment point (30) is provided at the end of the piston rod (32) and the second attachment point in the area of the piston rod guide (33) of the piston rod (32) resp. in the central area of the cylinder tube (35) of the hydraulic cylinder (3).

## Revendications

1. Charrue réversible avec une tour rapportée avec des points d'attache pour l'attache de la charrue réversible à un tracteur, avec un châssis de charrue (1) qui porte sur un côté des corps de charrue (2) tournant à droite et sur le côté opposé des corps de charrue tournant à gauche et est rotatif autour d'un axe de rotation par l'intermédiaire d'au moins un cylindre rotatif par rapport à la tour rapportée, de manière à ce qu'on puisse labourer au choix avec le côté portant les corps de charrue (2) tournant à droite ou avec le côté portant les corps de charrue tournant à gauche, ainsi qu'avec une roue stabilisatrice (3) disposée sur le châssis de charrue (1) pour le guidage en profondeur de travail de la charrue réversible, roue stabilisatrice qui, pour permettre le guidage en profondeur de la charrue réversible dans les deux positions rotatives, peut être pivotée à des côtés opposés du châssis de la charrue et dont le guidage en profondeur de travail peut être réglé via un cylindre hydraulique (4),
**caractérisée**
**en ce que** le cylindre hydraulique (4) présente deux chambres de compression (5), un espace annulaire (15) et une chambre de piston (16), en ce que le cylindre hydraulique (4) est en liaison avec une unité de soupapes (10) qui relie l'espace annulaire (15) et la chambre de piston (16) hydrauliquement l'un avec l'autre et, ainsi, permet un échange d'huile entre les deux chambres de compression (5) pendant le processus de pivotement de la roue stabilisatrice, étant donné qu'est prévu un accumulateur de pression (6) qui est relié hydrauliquement à l'espace annulaire (15) et via l'unité de soupapes (10) à la chambre de piston (16) et, pendant le processus de pivotement de la roue stabilisatrice, collecte de l'huile des chambres de compression (5) et la décharge également de nouveau, et en ce que l'unité de soupapes (10) empêche un échange d'huile entre les chambres de compression (5) pendant les travaux de labourage.

2. Charrue réversible avec une tour rapportée avec des points d'attache pour l'attache de la charrue réversible à un tracteur, avec un châssis de charrue (1) qui porte sur un côté des corps de charrue (2) tournant à droite et sur le côté opposé des corps de charrue tournant à gauche et est rotatif autour d'un axe de rotation par l'intermédiaire d'au moins un cylindre rotatif par rapport à la tour rapportée, de manière à ce qu'on puisse labourer au choix avec le côté portant les corps de charrue (2) tournant à droite ou avec le côté portant les corps de charrue tournant à gauche, ainsi qu'avec une roue stabilisatrice (3) disposée sur le châssis de charrue (1) pour le guidage en profondeur de travail de la charrue réversible, roue stabilisatrice qui, pour permettre le guidage en profondeur de la charrue réversible dans les deux positions rotatives, peut être pivotée à des côtés opposés du châssis de la charrue et dont le guidage en profondeur de travail peut être réglé via un cylindre hydraulique (4),
**caractérisée**
**en ce que** le cylindre hydraulique (4) présente une chambre de compression (5) qui est reliée hydrauliquement à un accumulateur de pression (6), en ce que le cylindre hydraulique (4) est en liaison avec une unité de soupapes (10) qui relie l'espace annulaire et l'accumulateur de pression (6) hydrauliquement l'un avec l'autre et, ainsi, permet un échange d'huile entre la chambre de compression et l'accumulateur de pression (6) de manière à ce que, pendant le processus de pivotement de la roue stabilisatrice (3), l'accumulateur de pression (6) collecte tout d'abord de l'huile du cylindre hydraulique (4), puis décharge de nouveau l'huile, et en ce que l'unité de soupapes (10) empêche un échange d'huile entre la chambre de compression et l'accumulateur de pression (6) pendant les travaux de labourage.

3. Charrue réversible avec une tour rapportée avec des points d'attache pour l'attache de la charrue réversible à un tracteur, avec un châssis de charrue (1) qui porte sur un côté des corps de charrue (2) tournant à droite et sur le côté opposé des corps de charrue tournant à gauche et est rotatif autour d'un axe de rotation par l'intermédiaire d'au moins un cylindre rotatif par rapport à la tour rapportée, de manière à ce qu'on puisse labourer au choix avec le côté portant les corps de charrue (2) tournant à droite ou avec le côté portant les corps de charrue tournant à gauche, ainsi qu'avec une roue stabilisatrice (3) disposée sur le châssis de charrue (1) pour le guidage en profondeur de travail de la charrue réversible, roue stabilisatrice qui, pour permettre le guidage en profondeur de la charrue réversible dans les deux positions rotatives, peut être pivotée à des côtés opposés du châssis de la charrue et dont le guidage en profondeur de travail peut être réglé via un cylindre hydraulique (4),
**caractérisée**
**en ce que** le cylindre hydraulique (4) est formé comme vérin synchrone et présente deux chambres de compression (5) de la même taille, un premier espace annulaire et un deuxième espace annulaire, en ce que le vérin synchrone est en liaison avec une unité de soupapes (10) qui relie les espaces annulaires (5) hydrauliquement l'un avec l'autre et permet un échange d'huile entre les deux chambres de compression (5) pendant le processus de pivotement de la roue stabilisatrice, étant donné que, pendant le processus de pivotement de la roue stabilisatrice, le premier espace annulaire collecte de l'huile du deuxième espace annulaire et la décharge également de nouveau dans le deuxième espace annulaire, et en ce que l'unité de soupapes (10) empêche un échange d'huile entre les chambres de compression (5) pendant les travaux de labourage.

4. Charrue réversible selon au moins l'une quelconque des revendications 1 à 3,
**caractérisée**
**en ce que** l'unité de soupapes (10) permet via un commutateur (20) l'échange d'huile pour le processus de pivotement de la roue stabilisatrice (3) et, après la fin du processus de pivotement de la roue stabilisatrice (3), coupe de nouveau le flux d'huile.

5. Charrue réversible selon la revendication 4,
**caractérisée**
**en ce que** le commutateur (20) commute l'unité de soupapes (10) mécaniquement, hydrauliquement, pneumatiquement, électriquement, électroniquement ou par l'intermédiaire de la force gravitationnelle, de préférence par l'intermédiaire d'un commutateur magnétique (21) qui, au début de la rotation, est alimenté en courant par une unité de commande, étant donné que l'unité de commande est conçue de manière à préserver le signal de commutation au moyen d'un débitmètre.

6. Charrue réversible selon au moins l'une quelconque des revendications 1 à 5,
**caractérisée**
**en ce que** le cylindre hydraulique (4) présente deux points d'attache (30, 31) pour l'attache à la roue stabilisatrice (3), étant donné que le premier point d'attache (30) est prévu à l'extrémité de la tige de piston (32) et le deuxième point d'attache au niveau du guide de tige de piston (33) de la tige de piston (32) resp. dans la région centrale du tube cylindrique (35) du cylindre hydraulique (3).
